# EUROPEAN PATENT SPECIFICATION

(11) **EP 3 193 050 B1**
(45) Date of publication and mention of the grant of the patent: **14.11.2018**
(21) Application number: 16151412.0
(22) Date of filing: 15.01.2016
(51) Int. Cl.: F16K 1/52, F24D 19/10, F16K 27/02, G05D 16/06, G05D 23/02, G05D 27/00, G05D 7/01

(54) **VALVE, IN PARTICULAR HEAT EXCHANGER VALVE**
VENTIL, INSBESONDERE WÄRMETAUSCHERVENTIL
SOUPAPE, NOTAMMENT SOUPAPE D'ÉCHANGEUR DE CHALEUR

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- EP-A1- 2 818 960
- EP-A2- 1 193 432

## Description

The present invention relates to a valve, in particular a heat exchanger valve comprising a housing having a first port, a second port, a flow path between said first port and said second port, valve means being located in said flow path and including a valve element and a valve seat, and reversing means reversing a flow direction through said valve means.

Such a valve can be used to control a flow of a heat carrier fluid through a heat exchanger, for example a radiator, a floor heating piping or heat exchanger of an air conditioner.

Such a valve is known from EP 1 193 432 A2.

Usually such a valve should be mounted in such a way that the fluid passes the valve seat before arriving at the valve element. In this way it is possible to avoid a so called "water hammer", which could occur when the flow direction is in the other way and the valve element has almost closed the valve. The reversing means are used to reverse the flow direction if the heat exchanger valve has been mounted without taking care of the direction of flow. Such a situation often arises when the valve is mounted by people without the necessary education or when the flow direction is not known.

EP 2 818 960 A1 describes a valve arrangement which can be used for a heat exchanger. The valve arrangement comprises a housing having a first port, a second port, a flow path between the first port and the second port, valve means which are located in the flow path and including a valve element and a valve seat. Furthermore, the valve comprises a dynamic unit.

The object underlying the invention is to provide a heat exchanger valve which can be mounted by people with poor education.

This object is solved with a heat exchanger valve as described at the outset in that a dynamic unit is arranged in said flow path, said dynamic unit keeping constant a pressure drop over said valve means, wherein said reversing means change a position of said dynamic unit when reversing said flow direction.

The dynamic unit facilitates further the installation of a heating or cooling system having a heat exchanger and the heat exchanger valve. The dynamic unit keeps constant the pressure drop over the valve means so that the flow of the heat carrier fluid is controlled exclusively by the distance between the valve element and the valve seat. The requirements for balancing out several heat exchanger valves in the heating or cooling system are therefore lowered or no longer necessary. The dynamic unit can always have the correct position with respect to the valve means independently of the direction of flow which is adjusted by the reversing means. In a preferred embodiment said reversing means comprise an insert which is mountable with different angular positions in said housing, wherein said dynamic unit is arranged in said insert. Basically said reversing means is
mountable in two different angular positions which positions are opposite to each other or have an angular distance of 180°. Such a possibility takes care of the two possible flow directions of the heat carrying or cooling fluid.

Preferably said insert is rotatable within said housing. This means that it is not necessary to disassemble completely the heat exchanger valve when the flow direction is reversed. It is only necessary to rotate the insert within said housing, for example by 180°.

In a preferred embodiment said insert comprises an inlet opening inclined with respect to a moving axis of said valve element. In this way it is possible to use the reversing unit in a valve in which the first port and the second port have an angle of e. g. 90° relative to each other. However, it is also possible to use the insert in a valve housing in which the two ports are arranged with a common axis.

Preferably said dynamic unit comprises a membrane and a spring located in a spring chamber, wherein said inlet opening opens into said spring chamber. The fluid entering the dynamic unit reaches the spring chamber and passes a dynamic throttling element to arrive at the valve seat at a side of the valve seat opposite to the valve element.

In this case it is preferred that said membrane is loaded by a pressure difference of a first pressure in said spring chamber and of a second pressure at an pressure opening of said insert, which is in fluid connection with an outlet of said housing. Depending on the flow direction, the outlet of the housing is the first port or the second port. When the pressure opening is provided in said insert and is in fluid connection with the outlet of the housing, it is not necessary to have a separate channel transmitting the pressure at the outlet to the respective side of the membrane.

Preferably said membrane is arranged in said pressure opening. The pressure in the pressure opening can directly act on the membrane.

Preferably said pressure opening and said membrane have the same size. This means that the pressure in the pressure opening is distributed evenly over the membrane.

Preferably said membrane is fixed in said pressure opening by fixing means mounted in said pressure opening. The fixing means can be formed by a clamping ring, a spring ring, or the like.

In a preferred embodiment said dynamic unit comprises a base made of a plastic material. This keeps production costs low. Furthermore, the risk of corrosion is rather low.

Preferably said pressure opening continues in a hollow cylinder and said base is positioned in said hollow cylinder. This facilitates the mounting of the dynamic unit. It is only necessary to insert the base into the hollow cylinder and to fix it there. The fixation can be made by the same fixing means fixing the membrane in the pressure opening.

In a preferred embodiment presetting means are provided defining a maximum flow through said valve.

A preferred embodiment of the heat exchanger valve according to the invention is now described in more detail with reference to the drawings, wherein:
- Fig. 1: is a sectional view of a heat exchanger valve and
- Fig. 2: is a perspective sectional view of the heat exchanger valve.

A heat exchanger valve 1 comprises a housing 2. The housing has a first port 3 and a second port 4. A flow path is located between the first port 3 and the second port 4. Furthermore, valve means are arranged in said housing 2 and comprise a valve element 5 and a valve seat 6.

The valve element is connected to a stem 7. The stem 7 is loaded by an opening spring 8 moving the valve element 5 away from the valve seat 6.

A pin 9 which is arranged in a stuffing box 10 is used to move stem 7 against the force of the opening spring 8. To this end the pin 9 comprises an end 11 protruding out of the stuffing box. An actuator, for example a thermostatic actuator, can be mounted on the valve to act on the end 11 of pin 9.

In such a valve 1 the flow direction of a heat carrier flow should be so that the fluid enters the valve seat 6 from a side opposite to the valve element 5, i. e. it arrives at the vale element 5 only after passing the valve seat. This would require that the housing 2 is mounted in a correct position. However, this is not always done with the necessary accuracy in the prior art. In order to avoid the wrong flow direction through the valve seat 6, reversing means 12 are provided with which the flow direction through the valve seat 6 can be reversed in case the housing 2 has improperly been mounted.

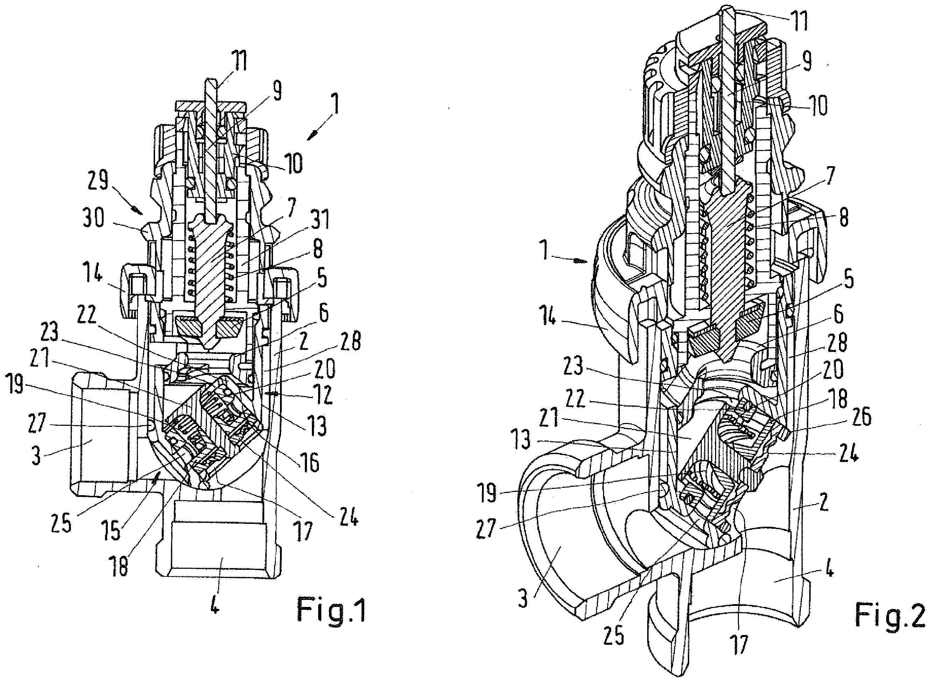

The reversing means 12 comprise an insert 13 which is rotatable within said housing 2. In order to rotate the insert 13 within the housing a ring 14 is provided. The ring 14 is blocked against rotation relative to the housing 2 in the position shown in Fig. 1. However, when the ring 14 is lifted, i. e. moved in a direction away from the valve seat 6, the ring 14 can be rotated together with the insert 13. The ring 14 can be moved back in the position shown in Fig. 1 in two angular positions only so that the reversing means 12 only can be mounted with two different angular positions in the housing 2.

A dynamic unit 15 is arranged in said insert 13 so that the position of the dynamic unit 15 is changed, when the reversing means 12 reverse the flow direction through the valve seat 6.

The insert 13 comprises a hollow cylinder 16 ending in a pressure opening 17. In other words, the pressure opening 17 continues in the hollow cylinder 16. A base 18 is mounted in the hollow cylinder 16 and separates the pressure opening 17 from a spring chamber 19. A spring 20 is arranged in said spring chamber 19 and acts on a throttling element 21. The throttling element together with a throttling ring 22 located at an end of the hollow cylinder 16 of the hollow cylinder 16 defines a throttle 23, the function of which will be explained later.

A membrane 24 which is connected to the throttling element 21 is arranged in said pressure opening 17 on a side of the base 18 opposite to the spring 19. The base 18 has some openings so that a pressure in spring chamber 19 acts on the side of the membrane 24 facing base 18.

The insert 13, more precisely the hollow cylinder 16, comprises an inlet opening 25 through which fluid can enter the spring chamber 19.

The membrane 24 has the same size as the pressure opening 17. Fixing means 26 are provided in the pressure opening 17 fixing said membrane 24 and said base 18. The fixing means can be, for example, a spring ring or the like.

A sealing ring 27 which is slanted or inclined with respect to a moving axis of the valve element 5 forms a fluid tight seal between the first port 3 and the second port 4 irrespective of the rotational position of the insert 13.

A ring channel 28 is provided between the insert 13 and the housing 2.

In the position shown in Fig. 1 and 2 the first port 3 is used as inlet and the second port 4 is used as outlet of the valve 1. Fluid entering the spring chamber 19 via the inlet opening 25 acts on membrane 24 in a direction to move the throttling element 21 towards the throttling ring 22 and to increase the throttling resistance of throttle 23. Spring 20 acts in the opposite direction. Fluid passing through the throttle 23 and through a gap between the valve seat 6 and the valve element 5 reaches the second port 4 and the pressure opening 17. This has the advantage that the outlet pressure of the valve is working directly on the membrane and no additional bores or channels are needed. The pressure of the fluid at the second port 4 acts on the opposite side of membrane 24 and acts to move the throttling element 21 away from the throttling ring 22.

The force produced by the pressure difference between the pressure in the spring chamber 19 and the pressure at the pressure opening 17 is always the same as the pressure produced by the spring 20. In this way it is possible to keep constant the pressure drop over the valve means formed by valve element 5 and valve seat 6 irrespective of the pressure at the inlet and the pressure at the outlet.

When the valve 1 is mounted so that the second port 4 is used as inlet, the reversing means 12 are rotated by means of ring 14 so that again the fluid can enter spring chamber 19 via the inlet opening 25 and the pressure at the first port 3 acts on membrane 24 on the side opposite to base 18. In this case the function of the dynamic unit 15 is the same.

Stem 7 is arranged in a valve top 29 having an outer part 30 and an inner part 31. The inner part 31 can be rotated with respect to the outer part 30 in order to perform a presetting of the valve 1 as it is known in the art.

The valve top 29 or parts thereof can be made of a plastic material. The same is true for the stuffing box 10. Furthermore, the insert 13 can be made of a plastic material as well as the base 18. All parts can be produced by injection molding.

## Claims

1. Valve, in particular heat exchanger valve (1) comprising a housing (2) having a first port (3), a second port (4), a flow path between said first port (3) and said second port (4), valve means (5, 6) being located in said flow path and including a valve element (5) and a valve seat (6), and reversing means (12) reversing a flow direction through said valve means (5, 6), **characterized in that** a dynamic unit (15) is arranged in said flow path, said dynamic unit (15) keeping constant a pressure drop over said valve means (5, 6), wherein said reversing means (12) change a position of said dynamic unit (15) when reversing said flow direction.

2. Valve according to claim 1, **characterized in that** said reversing means (12) comprise an insert (13) which is mountable with different angular positions in said housing (2), wherein said dynamic unit (15) is arranged in said insert (13).

3. Valve according to claim 2, **characterized in that** said insert (13) is rotatable within said housing.

4. Valve according to claim 2 or 3, **characterized in that** said insert (13) comprises an inlet opening (25) inclined with respect to a moving axis of said valve element (5).

5. Valve according to any of claims 2 to 4, **characterized in that** said dynamic unit (15) comprises a membrane (24) and a spring (20) located in a spring chamber (19), wherein said inlet opening (25) opens into said spring chamber (19).

6. Valve according to claim 5, **characterized in that** said membrane (24) is loaded by a pressure difference of a first pressure in said spring chamber (19) and of a second pressure at pressure opening (17) of said insert (13) which is in fluid connection with an outlet of said housing (2).

7. Valve according to claim 6, **characterized in that** said membrane (24) is arranged in said pressure opening (17).

8. Valve according to claim 7, **characterized in that** said pressure opening (17) and said membrane (24) have the same size.

9. Valve according to claim 8, **characterized in that** said membrane (24) is fixed in said pressure opening (17) by fixing means (26) mounted in said pressure opening (17).

10. Valve according to any of claims 1 to 9, **characterized in that** said dynamic unit (15) comprises a base (18) made of a plastic material.

11. Valve according to claim 10, **characterized in that** said pressure opening (17) continues in a hollow cylinder (16) and said base (18) is positioned in said hollow cylinder (16).

12. Valve according to any of claims 1 to 11, **characterized in that** presetting means (30, 31) are provided defining a maximum flow through said valve.

## Patentansprüche

1. Ventil, insbesondere Wärmetauscherventil (1), umfassend ein Gehäuse (2), das Folgendes aufweist: einen ersten Anschluss (3), einen zweiten Anschluss (4), einen Durchflussweg zwischen dem ersten Anschluss (3) und dem zweiten Anschluss (4), Ventilmittel (5, 6), die sich in dem Durchflussweg befinden und ein Ventilelement (5) und einen Ventilsitz (6) sowie Umkehrmittel (12), die eine Durchflussrichtung durch die Ventilmittel (5, 6) umkehren, beinhalten, **gekennzeichnet dadurch, dass** eine dynamische Einheit (15) in dem Durchflussweg angeordnet ist, wobei die dynamische Einheit (15) einen Druckabfall über die Ventilmittel (5, 6) konstant hält, wobei die Umkehrmittel (12) eine Position der dynamischen Einheit (15) beim Umkehren der Durchflussrichtung ändern.

2. Ventil nach Anspruch 1, **gekennzeichnet dadurch, dass** die Umkehrmittel (12) einen Einsatz (13) umfassen, der in unterschiedlichen Winkelpositionen in dem Gehäuse (2) montierbar ist, wobei die dynamische Einheit (15) in dem Einsatz (13) angeordnet ist.

3. Ventil nach Anspruch 2, **gekennzeichnet dadurch, dass** der Einsatz (13) innerhalb des Gehäuses drehbar ist.

4. Ventil nach Anspruch 2 oder 3, **gekennzeichnet dadurch, dass** der Einsatz (13) eine Einlassöffnung (25) umfasst, die bezogen auf eine sich bewegende Achse des Ventilelements (5) geneigt ist.

5. Ventil nach einem der Ansprüche 2 bis 4, **gekennzeichnet dadurch, dass** die dynamische Einheit (15) eine Membran (24) und eine Feder (20) umfasst, die in einem Federraum (19) angeordnet sind, wobei sich die Einlassöffnung (25) in den Federraum (19) öffnet.

6. Ventil nach Anspruch 5, **gekennzeichnet dadurch, dass** die Membran durch einen Druckunterschied zwischen einem ersten Druck in dem Federraum (19) und einem zweiten Druck an einer Drucköffnung (17) des Einsatzes (13), die in Fluidverbindung mit einem Auslass des Gehäuses (2) steht, belastet wird.

7. Ventil nach Anspruch 6, **gekennzeichnet dadurch, dass** die Membran (24) in der Drucköffnung (17) angeordnet ist.

8. Ventil nach Anspruch 7, **gekennzeichnet dadurch, dass** die Drucköffnung (17) und die Membran (24) die gleiche Größe aufweisen.

9. Ventil nach Anspruch 8, **gekennzeichnet dadurch, dass** die Membran (24) in der Drucköffnung (17) durch in der Drucköffnung (17) montierte Befestigungsmittel (26) befestigt ist.

10. Ventil nach einem der Ansprüche 1 bis 9, **gekennzeichnet dadurch, dass** die dynamische Einheit (15) eine aus einem Kunststoffmaterial hergestellte Basis (18) umfasst.

11. Ventil nach Anspruch 10, **gekennzeichnet dadurch, dass** die Drucköffnung (17) in einem Hohlzylinder (16) weiterverläuft und die Basis (18) in dem Hohlzylinder (16) positioniert ist.

12. Ventil nach einem der Ansprüche 1 bis 11, **gekennzeichnet dadurch, dass** Voreinstellmittel (30, 31) bereitgestellt sind, die einen Maximaldurchfluss durch das Ventil definieren.

## Revendications

1. Soupape, en particulier soupape d'échangeur de chaleur (1) comprenant un boîtier (2) présentant un premier port (3), un second port (4), un chemin d'écoulement entre ledit premier port (3) et ledit second port (4), des moyens de soupape (5, 6) étant situés dans ledit chemin d'écoulement et comprenant un élément de soupape (5) et un siège de soupape (6), et des moyens d'inversion (12) pour inverser une direction d'écoulement à travers lesdits moyens de soupape (5, 6), **caractérisée en ce qu'**une unité dynamique (15) est agencée dans ledit chemin d'écoulement, ladite unité dynamique (15) maintenant constante une chute de pression sur lesdits moyens de soupape (5, 6), dans laquelle lesdits moyens d'inversion (12) changent une position de ladite unité dynamique (15) lors de l'inversion de ladite direction d'écoulement.

2. Soupape selon la revendication 1, **caractérisée en ce que** lesdits moyens d'inversion (12) comprennent un insert (13) qui peut être monté avec différentes positions angulaires dans ledit boîtier (2), dans laquelle ladite unité dynamique (15) est agencée dans ledit insert (13).

3. Soupape selon la revendication 2, **caractérisée en ce que** ledit insert (13) est rotatif à l'intérieur du dudit boîtier.

4. Soupape selon la revendication 2 ou 3, **caractérisée en ce que** ledit insert (13) comporte une ouverture d'entrée (25) qui est inclinée par rapport à un axe mobile dudit élément de soupape (5).

5. Soupape selon l'une quelconque des revendications 2 à 4, **caractérisée en ce que** ladite unité dynamique (15) comprend une membrane (24) et un ressort (20) situé dans une chambre de ressort (19), dans laquelle ladite ouverture d'entrée (25) s'ouvre dans ladite chambre de ressort (19).

6. Soupape selon la revendication 5, **caractérisée en ce que** ladite membrane (24) est chargée par une différence de pression entre une première pression dans ladite chambre de ressort (19) et une seconde pression au niveau d'une ouverture de pression (17) dudit insert (13) qui est en connexion fluidique avec une sortie dudit boîtier (2).

7. Soupape selon la revendication 6, **caractérisée en ce que** ladite membrane (24) est agencée dans ladite ouverture de pression (17).

8. Soupape selon la revendication 7, **caractérisée en ce que** ladite ouverture de pression (17) et ladite membrane (24) ont la même taille.

9. Soupape selon la revendication 8, **caractérisée en ce que** ladite membrane (24) est fixée dans ladite ouverture de pression (17) à l'aide de moyens de fixation (26) montés dans ladite ouverture de pression (17) .

10. Soupape selon l'une quelconque des revendications 1 à 9, **caractérisée en ce que** ladite unité dynamique (15) comprend une base (18) constituée d'une matière plastique.

11. Soupape selon la revendication 10, **caractérisée en ce que** ladite ouverture de pression (17) continue en un cylindre creux (16) et ladite base (18) est positionnée dans ledit cylindre creux (16).

12. Soupape selon l'une quelconque des revendications 1 à 11, **caractérisée en ce que** des moyens de préréglage (30, 31) sont prévus pour définir un écoulement maximum à travers ladite soupape.
